# EUROPEAN PATENT SPECIFICATION

(11) **EP 0 552 621 B1**
(45) Date of publication and mention of the grant of the patent: **24.05.1995**
(21) Application number: 93100229.9
(22) Date of filing: 08.01.1993
(51) Int. Cl.: F16B 2/12, E04G 17/04, B25B 1/10

(54) **Panel clamp**
Klemmvorrichtung für Platten
Bride de serrage pour panneaux

(30) Priority: 23.01.1992 GB 9201473
(43) Date of publication of application: 28.07.1993
(73) Proprietor: BOULTON PLC, Birmingham (GB)
(72) Inventor: Cornish, John Robert Earl, Chislehurst, Kent, (GB)
(74) Representative: Frankland, Nigel Howard

(56) References cited:
- EP-A- 0 537 403
- DE-A- 3 517 304
- DE-A- 3 530 854
- US-A- 3 948 503

## Description

THE PRESENT INVENTION relates to a panel clamp and more particularly relates to a panel clamp adapted to be used to secure together formwork panels.

It has been proposed previously to provide panels which can be assembled together to create a formwork system. Typically such a panel consists of a thick plywood sheet which is mounted on a metal framework. The panels may be as large as 3 metres by 2.4 metres, and may have a weight, including the plywood, of up to 425 kilograms.

It is necessary to clamp the panels together when a large formwork system is being created, and the present invention seeks to provide an improved clamp for that purpose.

DE-A-3517304 on which the preamble of claim 1 is based discloses a clamp for clamping formwork panels. The clamp comprises a body supporting a fixed clamping element and also supporting a movable clamping element. Means are provided to move the movable clamping element from a released position to a clamping position. The body defines a datum plane which is defined between the clamping elements. The movable clamping element moves in a direction which is substantially parallel to the datum plane.

EP-A-0537403 also discloses a clamp for clamping formwork panels. The clamp comprises a body which supports a fixed clamping element and which also supports a movable clamping element. The clamping element can be moved from a released position to a clamping position. The clamping element comprises a swingable structure formed of two symmetrically arranged plates interconnected by means of bolts. One bolt passes through an elongate opening formed in the body, the elongate opening having an undulated upper edge. The opening has an axis which is substantially parallel with the datum plane.

Another bolt, carried by part of the clamping element that extends to the side of the body remote from the datum plane is engaged by a slidably movable wedge element. The wedge element serves, when actuated, initially to move the clamping element along the body and finally to move the clamping element to the clamping position.

According to this invention there is provided a clamp for clamping formwork panels, the clamp comprising a body supporting a fixed clamping element and supporting a movable clamping element, means being provided to move the movable clamping element from a released position to a clamping position, the body defining a datum plane being defined between the clamping elements, wherein the body defines a channel at an angle inclined to the datum plane, the movable clamping element having a portion adapted to be slidably received within the channel, the movable clamping element thus moving in a direction which is inclined at an angle to the datum plane.

Preferably a threaded bolt is located in the channel and received within a threaded bore defined within that part of the clamping element which is slidably received within the channel, means being provided to rotate the bolt.

Conveniently the body is defined by two spaced apart substantially parallel first plates, and two transversely extending spaced apart second plates which, together with the first plates define said inclined channel.

Preferably the edges of said first plates define the datum plane.

Alternatively plates which extend across the upper edges of the said first plates define the datum plane.

Preferably the said fixed clamping element is adapted to be mounted in a selected position.

Conveniently the said fixed clamp is provided with a shoe adapted to extend between the said first plates, a bolt being provided adapted to extend through a aperture formed in the shoe and a selected pair of coaligned apertures formed in the said first plates.

In order that the invention may be more readily understood, and so that further features thereof may be appreciated, the invention will now be described, by way of example, with reference to the accompanying drawings in which:
FIGURE 1 is a perspective view of a clamp in accordance with the invention with parts cut-away for the sake of clarity of illustration.
FIGURE 2 is a sectional view through two panels joined by the clamp of Figure 1, illustrating the clamp in position, and
FIGURE 3 is a perspective view of a modified embodiment of a clamp in accordance with the invention.

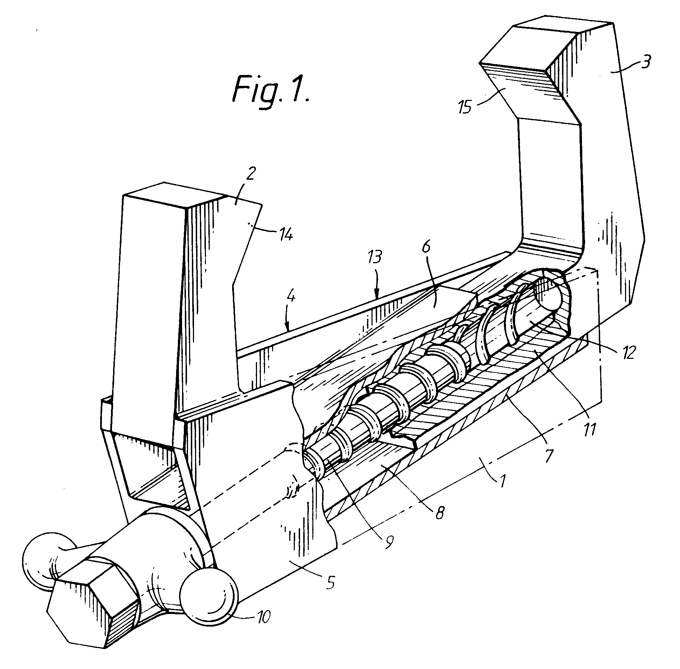

Referring initially to Figure 1 of the accompanying drawings a clamp comprises a main body part 1 which carries a fixed jaw 2, and a movable jaw 3 which is movably mounted on the body 1.

Considering the clamp in the orientation illustrated in Figure 1 the body 1 comprises two substantially vertical spaced apart plates 4,5. Two further plates 6,7 extend transversely between the vertical plates 4,5, the plates 6,7 being located at an angle to the horizontal and thus defining between them, and between the vertical plates 4 and 5, an inclined channel or passage 8. The lower end of the inclined passage 8 terminates at a position beneath the fixed jaw 2, which is welded in position between the upper parts of the vertical plates 4 and 5. A threaded bolt 9 is provided which extends from the lower end of the passage 8, axially of the passage. The bolt terminates with a "wing" fitting 10 at the end of the passage 8.

The movable jaw 3 is provided with a substantially square cross-section to portion 11 which is slidably received within the passage 8. This portion 11 is provided with a threaded bore 12 therethrough which receives the end of the threaded bolt 9. It will be appreciated that by rotating the "wing" 10 provided on the bolt, the movable jaw 3 may be moved towards or away from the jaw 2.

The upper edges of the parallel walls 4 and 5 define a datum plane 13. The jaw 3 moves towards the jaw 2 in a direction which is inclined to the datum plane 13 by an angle equal to the angle of inclination of the passage 8.

The jaw 2 and the jaw 3 are each provided with a protrusion 14, 15, of pointed form, on the part of the jaw facing the opposed jaw.

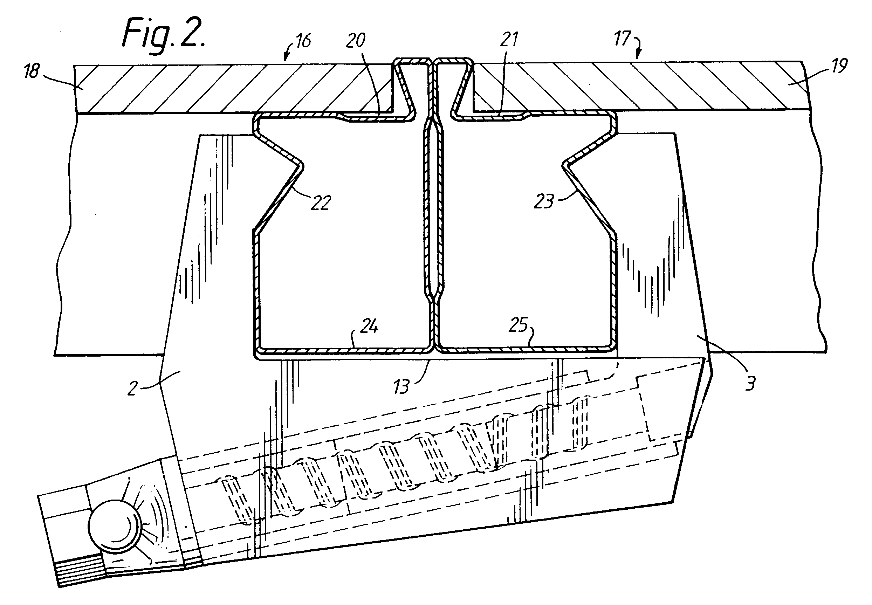

As can be seen most clearly from Figure 2, the clamp of Figure 1 is intended to be utilised to secure together two formwork panels 16, 17 each of which is provided with a front face of, for example, plywood 18, 19 and a peripheral hollow frame member 20, 21. It is to be observed that each frame member 20, 21 defines an inwardly recessed side portion 22, 23, on the side of the frame member directed away from the peripheral edge of the frame. Each recessed portion 22,23 is dimensioned and located to receive the inwardly directed pointed portions 14, 15 provided on the jaws 2, 3 of the clamp when the front rear faces 24, 25 of the frame members 20, 21 are substantially aligned with the datum plane 13.

Thus, in utilising the clamp of Figure 1 to secure together two panels as shown in Figure 2 the bolt is operated so that the movable jaw 3 is moved to a release position in which it is separated from the fixed jaw 2. The jaw 2 is located in position against the frame member 20, and the jaw element 3 is then caused to engage the frame member 21. The "wing" is then turned to draw the jaw 3 towards the jaw 2 and down towards the datum plane 13. Thus the movable jaw 3 is moved towards a clamping position. This movement ensures that the panels are brought into side-by-side engagement with the rear faces 24, 25 of the frame members 20, 21 substantially aligned adjacent the datum plane 13, with the consequent result that the front faces of the plywood panels 18 and 19 are substantially aligned. When the form is to be dismantled the movable jaw 3 is again moved to the release position, enabling the panels to be separated.

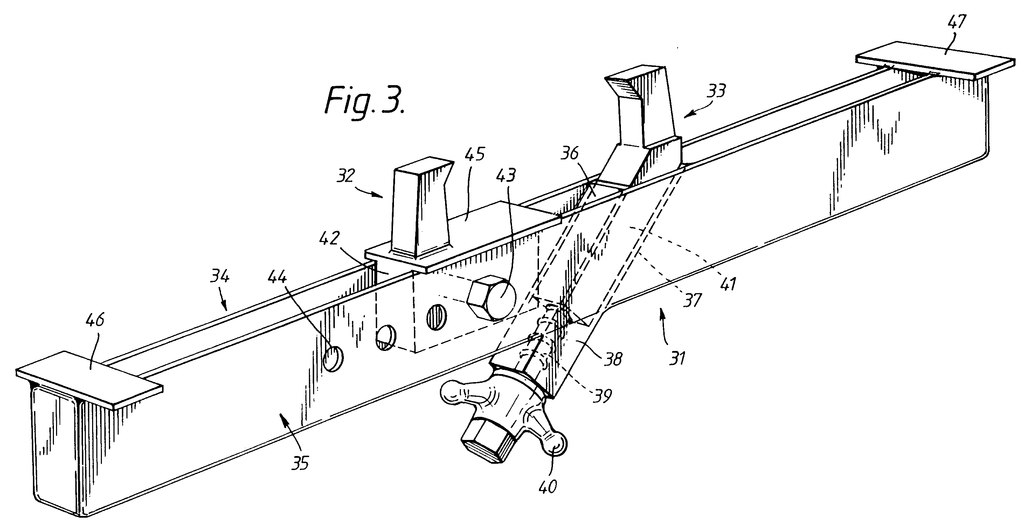

Figure 3 illustrates a modified embodiment of the invention, which is an aligning clamp. This embodiment of the invention comprises a body 31 having a substantially fixed jaw 32 and a movable jaw 33. The body 31 is formed of two spaced apart parallel plates 34, 35, and extending between these plates are two inclined plates 36, 37 which together form an inclined passage 38. A threaded bolt 39 extends axially of the passage 38 and terminates with an exposed "wing" portion 40.

The movable jaw 33 has a rectangular sectioned portion 41 which is slidably received within the passage 38. The portion 41 defines a threaded bore, (equivalent to the bore 12) which receives the end of the threaded bolt.

The relatively fixed jaw 32 is mounted on a shoe 42 which projects between the plates 34 and 35. A transverse bore is provided in the shoe 42 adapted to receive a bolt 43 which passes through a pair of coaligned apertures 44 provided in the walls 34 and 35. A number of pairs of apertures 44 are provided and it is thus to be appreciated that the shoe 42 may be positioned in alternate selected positions, respectively altering the distance between the relatively fixed jaw 32 and the movable jaw 33.

The shoe 42 incorporates a planar plate 45 which bridges across the top of the side walls 34 and 35 to establish the datum plane. At the ends of the body 31 further transverse plates 46 and 47 are provided which extend across the side walls 34 and 35, again lying in the datum plane.

It can be seen that the jaw members 32, 33 in the embodiment of Figure 3 have the same general configuration as jaw members illustrated in the embodiment of Figure 1, with each jaw being provided with a protrusion of generally pointed form on the part of the jaw facing the opposed jaw.

The clamp of Figure 3 may be used to coalign panels when they are interconnected. The jaws 32 and 33 will engage with the peripheral frame members of the panel, in a manner similar to that described with the embodiment of Figure 1. However, when the clamp has been tightened so that the panels are in position, parts of the panels will engage the plates 46 and 47 provided at the ends of the elongate body 31, which thus serve to align the panels.

It is to be appreciated that the position of the substantially fixed jaw 32 can be adjusted. This permits an infill of a selected size to be located between two adjacent panels which are clamped together using the clamp. This may be of significant value, especially if the form that is to be created has a dimension which is not equal to a multiple of the widths of the available panels. Thus a wood infill may be located between two adjacent panels which are securely clamped together by the clamp of Figure 3.

It is to be appreciated that since the threaded bolt extends into the threaded bore formed in the portion of the movable jaw which is received within the inclined channel defined by the body member, there is virtually no risk of the bolt becoming fouled by cement.

The described clamps are simple to fabricate, easy to operate, and reliable in use.

## Claims

1. A clamp for clamping formwork panels, the clamp comprising a body(1) supporting a fixed clamping element(2) and supporting a movable clamping element(3), means(9,10) being provided to move the movable clamping element(3) from a released position to a clamping position, the body(1) defining a datum plane(13) between the clamping elements(2,3) and a channel(8), the movable clamping element(3) having a portion(11) adapted to be slidably received within the channel, characterised in that the channel(8) is inclined at an angle to the datum plane(13), the movable clamping element(3) thus moving in a direction which is inclined at an angle to the datum plane(13).

2. A clamp according to Claim 1 wherein a threaded bolt(9) is located in the channel(8) and received within a threaded bore(12) defined within that part(11) of the movable clamping element(3) which is slidably received within the channel(8), means(10) being provided to rotate the bolt(9).

3. A clamp according to any one of the preceding Claims wherein the body(1) is defined by two spaced apart substantially parallel first plates(4,5), and two transversely extending spaced apart second plates(6,7) which, together with the first plates(4,5) define said inclined channel.

4. A clamp according to Claim 3 wherein the edges of said first plates(4,5) define the datum plane(13).

5. A clamp according to Claim 3 wherein a plate or plates(4,5,46,47) which extend across the upper edges of the said first plates(34,35) define the datum plane.

6. A clamp according to any one of the preceding Claims wherein the said fixed clamping element(32) is adapted to be mounted in a selected position.

7. A clamp according to Claim 6 wherein the said fixed clamping element(32) is provided with a shoe(42) adapted to extend between the said first plates(34,35), a bolt(43) being provided adapted to extend through an aperture formed in the shoe(42) and a selected pair of coaligned apertures(44) formed in the said first plates(34,35).

## Patentansprüche

1. Klemmvorrichtung zum Klemmen von Verschalungsplatten, wobei die Klemmvorrichtung umfaßt: einen Körper (1), der ein fixiertes Klemmelement (2) und ein bewegliches Klemmelement (3) trägt, Mittel (9, 10) zum Bewegen des beweglichen Klemmelementes (3) von einer gelösten Position in eine Klemmposition, wobei der Körper (1) eine Grundebene (13) zwischen den Klemmelementen (2, 3) und einem Kanal (8) festlegt, wobei das bewegliche Klemmelement (3) einen Abschnitt (11) aufweist, der zur verschiebbaren Aufnahme in dem Kanal ausgebildet ist, dadurch gekennzeichnet, daß der Kanal (8) mit einem Winkel zur Grundebene (13) geneigt ist, und sich das bewegliche Klemmelement (3) somit in einer Richtung bewegt, welche mit einem Winkel zur Grundebene (13) geneigt ist.

2. Klemmvorrichtung nach Anspruch 1, dadurch gekennzeichnet, daß ein mit einem Gewinde versehener Bolzen (9) in dem Kanal (8) angeordnet und in einer mit einem Gewinde versehenen Bohrung (12) aufgenommen ist, welche in dem Teil (11) des beweglichen Klemmelementes (3) vorgesehen ist, der in dem Kanal (8) verschiebbar aufgenommen ist, wobei Mittel (10) zum Drehen des Bolzens (9) vorgesehen sind.

3. Klemmvorrichtung nach einem oder mehreren der vorhergehenden Ansprüche, dadurch gekennzeichnet, daß der Körper (1) von zwei mit Abstand zueinander angeordneten, im wesentlichen parallelen ersten Platten (4, 5) und zwei sich in Querrichtung erstreckenden, mit Abstand zueinander angeordneten zweiten Platten (6, 7) festgelegt ist, welche zusammen mit den ersten Platten (4, 5) den geneigten Kanal definieren.

4. Klemmvorrichtung nach Anspruch 3, dadurch gekennzeichnet, daß die Kanten der ersten Platten (4, 5) die Grundebene (13) festlegen.

5. Klemmvorrichtung nach Anspruch 3, dadurch gekennzeichnet, daß eine Platte oder Platten (4, 5, 46, 47), welche sich quer über die oberen Kanten der ersten Platten (34, 35) erstrecken, die Grundebene festlegen.

6. Klemmvorrichtung nach einem oder mehreren der vorhergehenden Ansprüche, dadurch gekennzeichnet, daß das fixierte Klemmelement (32) zur Befestigung in einer ausgewählten Position beschaffen ist.

7. Klemmvorrichtung nach Anspruch 6, dadurch gekennzeichnet, daß das fixierte Klemmelement (32) mit einem (Gleit-)Schuh (42) ausgestattet ist, der so angepaßt ist, daß er sich zwischen den ersten Platten (34, 35) erstreckt, wobei ein Bolzen (43) vorgesehen und derart angepaßt ist, daß er sich durch eine in dem (Gleit-)Schuh gebildete Öffnung und ein ausgewähltes Paar von kolinaren Öffnungen (44), die in den ersten Platten (34, 35) gebildet sind, erstreckt.

## Revendications

1. Une bride de serrage pour serrer des panneaux de coffrage, la bride comprenant un corps (1) supportant un élément de serrage fixe (2) et supportant un élément de serrage mobile (3), un moyen (9, 10) étant prévu pour déplacer l'élément de serrage mobile (3) depuis une position libérée vers une position de serrage, le corps (1) définissant un plan de référence (13) entre les éléments de serrage (2, 3), et un canal (8), l'élément de serrage mobile (3) ayant une portion (11) propre à être reçue à coulissement dans le canal, caractérisée en ce que le canal (8) est incliné avec un angle par rapport au plan de référence (13), l'élément de serrage mobile (3) se déplaçant ainsi suivant une direction qui est inclinée avec un angle par rapport au plan de référence (13).

2. Une bride de serrage conforme à la revendication 1 dans laquelle un boulon fileté (9) est localisé dans le canal (8) et reçu dans un trou taraudé (12) défini dans ladite portion (11) de l'élément de serrage mobile (3) qui est reçue à coulissement dans le canal (8), un moyen (10) étant prévu pour tourner le boulon (9).

3. Une bride de serrage conforme à l'une quelconque des revendications précédentes dans laquelle le corps (1) est défini par deux premières plaques distantes sensiblement parallèles (4, 5), et deux secondes plaques distantes s'étendant transversalement (6, 7) qui ensemble avec les premières plaques (4, 5) définissent ledit canal incliné.

4. Une bride de serrage conforme à la revendication 3 dans laquelle les bords desdites premières plaques (4, 5) définissent le plan de référence (13).

5. Une bride de serrage conforme à la revendication 3 dans laquelle une plaque ou des plaques (45, 46, 47) qui s'étendent en travers des bords supérieurs desdites premières plaques (34, 35) définissent le plan de référence.

6. Une bride de serrage conforme à l'une quelconque des revendications précédentes dans laquelle ledit élément de serrage fixe (32) est propre à être monté à une position choisie.

7. Une bride de serrage conforme à la revendication 6 dans laquelle ledit élément de serrage fixe (32) est prévu avec une semelle (42) propre à s'étendre entre lesdites premières plaques (34, 35), un boulon (43) étant prévu propre à s'étendre à travers un orifice formé dans la semelle (42) et une paire choisie d'orifices colinéaires (44) formés dans lesdites premières plaques (34, 35).
